# EUROPÄISCHE PATENTSCHRIFT

(11) **EP 2 998 061 B1**
(45) Veröffentlichungstag und Bekanntmachung des Hinweises auf die Patenterteilung: **10.07.2019**
(21) Anmeldenummer: 15178500.3
(22) Anmeldetag: 27.07.2015
(51) Int. Cl.: B23P 15/00, B23Q 11/08, F01D 5/00, F01D 25/28

(54) **VERFAHREN UND VORRICHTUNG ZUM BEARBEITEN VON SCHAUFELSPITZEN EINES VERDICHTERROTORS EINER GASTURBINE**
METHOD AND DEVICE FOR MACHINING THE BLADE TIPS OF A COMPRESSOR ROTOR OF A GAS TURBINE
PROCEDE ET DISPOSITIF D'USINAGE DES EXTREMITES D'AUBE D'UN ROTOR DE COMPRESSEUR D'UNE TURBINE A GAZ

(30) Priorität: 22.09.2014 DE 102014219050
(43) Veröffentlichungstag der Anmeldung: 23.03.2016
(73) Patentinhaber: Rolls-Royce Deutschland Ltd & Co KG, 15827 Blankenfelde-Mahlow (DE)
(72) Erfinder: Bretschneider, André, 15827 Dahlewitz (DE)

(56) Entgegenhaltungen:
- EP-A1- 1 775 067
- EP-A1- 2 730 370
- DE-A1-102007 041 805
- DE-A1-102008 062 364
- DE-A1-102013 107 497
- DE-C1- 19 921 198
- US-A- 4 741 128

## Beschreibung

Die Erfindung bezieht sich auf ein Verfahren und eine Vorrichtung zum Bearbeiten von Schaufeln, insbesondere von Schaufelspitzen, eines montierten Verdichterrotors einer Gasturbine gemäß den Oberbegriffen der Ansprüche 1 und 6. Ein solches Verfahren bzw. eine solche Vorrichtung ist aus der EP 2 730 370 bekannt.

Aus dem Stand der Technik ist es bekannt, Rotoren von Gasturbinen zu bearbeiten, beispielsweise zum Schleifen von Schaufelspitzen der Verdichterschaufeln. Gasturbinenverdichter weisen üblicherweise unterschiedliche Schaufelreihen auf. Zum einen sind dies Blisks, bei welchen eine Scheibe einstückig mit den Schaufeln ausgebildet ist. Derartige Blisks können vor der Montage fertig bearbeitet sein und brauchen im montierten Zustand des Verdichterrotors nicht nachgearbeitet werden. Eine weitere Bauweise von Verdichterrotoren weist zumindest eine oder mehrere Schaufelreihe auf, welche separat montierte Schaufeln umfasst, die an einer Scheibe verankert sind. Bedingt durch Montagetoleranzen, Herstellungstoleranzen oder ähnliches, ist es erforderlich, die Schaufelspitzen der einzelnen Schaufeln der zumindest einen Schaufelreihe in montiertem Zustand nachzubearbeiten, insbesondere zu schleifen. Der bei diesem Schleifvorgang auftretende Funkenflug kann jedoch zu Beschädigungen der Blisks oder Schaufeln führen.

Aus dem Stand der Technik ist es bekannt, die nicht zu bearbeitenden Schaufelreihen, insbesondere Blisks, mit einem Schutzlack oder einer Beschichtung zu versehen, bevor die anderen Schaufeln der zumindest einen zu bearbeitenden Schaufelreihe mechanisch bearbeitet werden. Diese Aufbringung eines Schutzlackes oder einer Beschichtung erfordert umfangreiche Arbeitsgänge am montierten Verdichterrotor. So ist es zunächst erforderlich, die nicht zu bearbeitenden Schaufeln zu entfetten. Nachfolgend werden diese lackiert und getrocknet. Nachdem nunmehr der Schutzlack oder die Beschichtung aufgebracht ist, kann das Bearbeiten der anderen Schaufeln erfolgen. Nachfolgend ist es erforderlich, die nicht zu bearbeitenden Schaufeln zu reinigen und den Schutzlack zu entfernen. Diese Vorgänge erfordern einen beträchtlichen Zeitaufwand und bringen hohe Kosten mit sich.

Die DE 10 2013 107 497 A1 fällt unter Artikel 54(3) EPÜ und offenbart eine Vorrichtung zur nicht-abrasiven Randschichtbearbeitung einer Rotorvorrichtung. Die Vorrichtung umfasst einen Behälter zur Aufnahme von Bearbeitungskörpern sowie eine Welle zum Halten der Rotorvorrichtung. Die Rotorvorrichtung ist über die Welle drehbar im Bereich von Seitenwänden des Behälters gelagert. Die Randschicht wird durch eine Bewegung der Bearbeitungskörper relativ zu der Rotorvorrichtung bearbeitet.

Die EP 2 730 370 A1 offenbart ein Verfahren und eine Vorrichtung zur Einstellung eines vorbestimmten radialen Spaltmaßes von Laufschaufeln einer Strömungsmaschine durch schleifende Bearbeitung der Laufschaufelspitzen in situ. Dazu wird der Bearbeitungsbereich mit einer Abschirmeinrichtung abgeschirmt.

Der Erfindung liegt die Aufgabe zugrunde, ein Verfahren sowie eine hierfür geeignete Vorrichtung der eingangs genannten Art zu schaffen, mittels derer eine zeitsparende und bauteilschonende Bearbeitung von Schaufeln, insbesondere Schaufelspitzen eines montierten Verdichterrotors einer Gasturbine, ermöglicht wird.

Erfindungsgemäß wird die Aufgabe durch die Merkmalskombinationen der unabhängigen Ansprüche 1 und 6 gelöst, die jeweiligen Unteransprüche zeigen weitere vorteilhafte Ausgestaltungen der Erfindung.

Erfindungsgemäß ist hinsichtlich der Vorrichtung somit vorgesehen, dass die Bearbeitung von Schaufeln, insbesondere von Schaufelspitzen eines montierten Verdichterrotors einer Gasturbine mittels einer Bearbeitungsmaschine erfolgt. Diese Bearbeitungsmaschine ist beispielsweise eine Schleif- oder Fräsmaschine, in welche der Verdichterrotor montiert wird. Der Verdichterrotor wird dabei in Rotation versetzt, so dass die Schaufelspitzen der jeweiligen Schaufelreihen mittels eines Schleifwerkzeuges bearbeitet werden können. Die erfindungsgemäße Vorrichtung umfasst ein Schutzgehäuse, welches die zumindest eine nicht zu bearbeitende Schaufelreihe umschließt und kapselt. Erfindungsgemäß ist das Schutzgehäuse stationär angeordnet, so dass es sich nicht mit dem Verdichterrotor dreht. Vielmehr ist bevorzugterweise das Schutzgehäuse an der Bearbeitungsmaschine gelagert. Das Schutzgehäuse umschließt somit die zumindest eine, nicht zu bearbeitenden Schaufelreihe und kapselt diese, so dass bei der Bearbeitung der zumindest einen zu bearbeitenden Schaufelreihe der dabei auftretende Funkenflug die nicht zu bearbeitenden Schaufeln nicht beeinträchtigen kann.

In besonders günstiger Ausgestaltung der Erfindung ist vorgesehen, dass das Schutzgehäuse an einem Traggestell befestigt oder angeordnet ist. Das Traggestell ist, zusammen mit dem Schutzgehäuse, präzise auf die Bearbeitungsmaschine aufsetzbar oder an dieser montierbar. Hierdurch wird sichergestellt, dass die vorgegebenen Toleranzen eingehalten werden und dass die in dem Schutzgehäuse gekapselten Schaufeln bei der Rotation des Verdichterrotors das Schutzgehäuse nicht berühren.

Um das Schutzgehäuse zu montieren und um die zumindest eine nicht zu bearbeitende Schaufelreihe, welche, wie erwähnt, beispielsweise in Form eines Blisk ausgebildet ist, zu kapseln, ist es besonders vorteilhaft, wenn das Schutzgehäuse bewegbare Gehäuseteile umfasst, welche klappbar oder schwenkbar sind. Nach dem Aufsetzen des Traggestells auf den Verdichterrotor, bevorzugterweise vor oder nach der Montage des zu bearbeitenden Verdichterrotors in der Bearbeitungsmaschine, ist somit eine exakte Positionierung des Schutzgehäuses durch Anlageflächen und Führungen relativ zu dem Verdichterrotor vorgegeben. Durch die bewegbaren Gehäuseteile, welche als schwenkbare Gehäuseteile oder in ähnlicher Weise ausgebildet sein können, ist es somit möglich, ohne die Gefahr von Beschädigungen die nicht zu bearbeitenden Schaufeln in dem Schutzgehäuse anzuordnen und dort zu kapseln.

Wie erwähnt, ist erfindungsgemäß das Schutzgehäuse stationär an der Bearbeitungsmaschine angebracht. Hierdurch ist es möglich, sehr enge Toleranzen, Dichtmaterial oder Spaltmaße des Schutzgehäuses gegenüber den nicht zu bearbeitenden Schaufeln vorzusehen. Hierdurch wird ein Eindringen von Partikeln, insbesondere von Funken und Fremdkörpern in den Innenraum des Schutzgehäuses vermieden.

Bezüglich des erfindungsgemäßen Verfahrens ergibt sich aus oben stehender Erläuterung der Vorrichtung, dass verfahrensgemäß zumindest eine nicht zu bearbeitende Schaufelreihe in ein stationäres Schutzgehäuse aufgenommen wird und nachfolgend die zu bearbeitenden Schaufeln mittels einer Bearbeitungsmaschine unter Rotation des Verdichterrotors bearbeitet werden, beispielsweise durch Schleifen oder Fräsen der Schaufelspitzen.

Bei dem erfindungsgemäßen Verfahren ist insbesondere vorgesehen, dass nach dem Einsetzen des montierten Verdichterrotors in die Bearbeitungsmaschine das Schutzgehäuse montiert wird, so dass die zumindest eine nicht zu bearbeitende Schaufelreihe durch das Schutzgehäuse gekapselt oder in diesem aufgenommen wird. Erfindungsgemäß ist somit nicht erforderlich, die zumindest eine, nicht zu bearbeitende Schaufelreihe mittels eines Schutzlackes oder in ähnlicher Weise abzudecken, so wie dies beim Stand der Technik bekannt ist. Da das Aufsetzen und Montieren des Schutzgehäuses mit einem sehr geringen Zeitaufwand erfolgen kann, verkürzt sich die gesamte Bearbeitungszeit erheblich.

Der erfindungsgemäß durch das Schutzgehäuse vorgesehene Schutz von nicht zu bearbeitenden Bereichen des Verdichterrotors kann auch an anderen Bereichen des Verdichterrotors vorgesehen werden, beispielsweise um die Rotortrommel selbst zu schützen oder abzuschirmen. Insgesamt ist die Erfindung bei allen Bearbeitungsvorgängen einsetzbar, bei welchen Bereiche eines rotierenden Bauteils bearbeitet werden, während andere Bereiche während des Bearbeitungsvorganges geschützt werden müssen. So ist es insbesondere erfindungsgemäß möglich, das Schutzgehäuse nicht nur zur Abdeckung gegen Funkenflug zu verwenden, sondern auch bei bestimmten Bearbeitungsvorgängen zum Schutz vor Kühlmitteln oder Schmiermitteln, zum Schutz gegen Fremdkörper oder zur thermischen Isolation.

Erfindungsgemäß ist es möglich, den zu bearbeitenden Verdichterrotor entweder zunächst in die Bearbeitungsmaschine einzusetzen und nachfolgend das Traggestell zusammen mit dem Schutzgehäuse zu montieren. Alternativ hierzu ist es auch möglich, den Verdichterrotor zunächst an dem Traggestell zu lagern und das Schutzgehäuse zu montieren bzw. zu schließen, bevor der Verdichterrotor zusammen mit dem Traggestell in eine Bearbeitungsmaschine eingesetzt wird.

Im Folgenden wird die Erfindung anhand eines Ausführungsbeispiels in Verbindung mit der Zeichnung beschrieben. Dabei zeigt:
- Fig. 1: eine perspektivische Ansicht eines erfindungsgemäßen geschlossenen Schutzgehäuses mit Traggestell,
- Fig. 2: eine Ansicht, analog Fig. 1, mit geöffnetem Schutzgehäuse,
- Fig. 3: eine Ansicht, analog Fig. 2, mit Verdichterrotor und geöffnetem Schutzgehäuse,
- Fig. 4: eine Ansicht, analog Fig. 3, mit geschlossenem Schutzgehäuse, und
- Fig. 5: eine vereinfachte Seiten-Schnittansicht, analog Fig. 4.

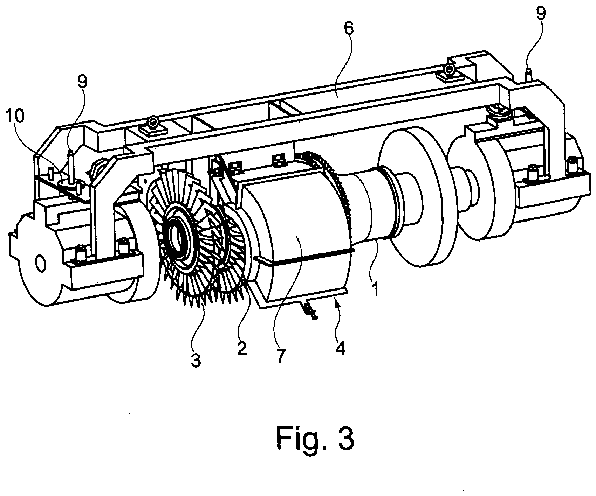

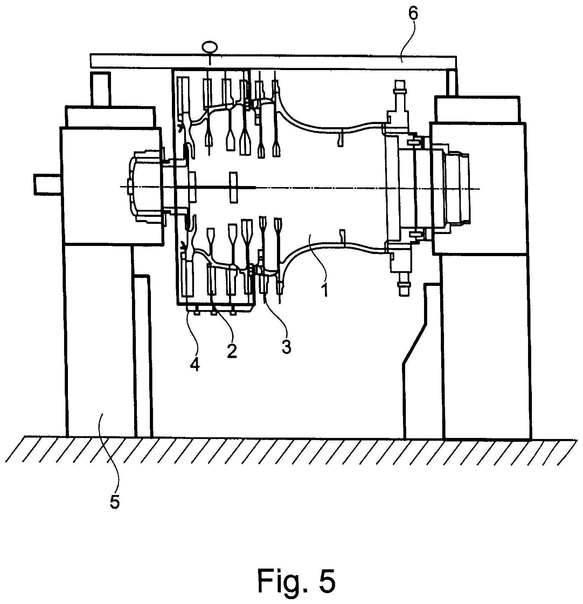

Insbesondere aus der Darstellung der Fig. 3 und 5 ergibt sich, dass ein montierter Verdichterrotor 1 einer Gasturbine nicht zu bearbeitende Schaufelreihen 2 sowie zu bearbeitende Schaufelreihen 3 umfasst. Die nicht zu bearbeitenden Schaufelreihen 2 sind beispielsweise in Form von Blisks ausgebildet, während die zu bearbeitenden Schaufelreihen einzelne, an einer Rotorscheibe befestigte Schaufeln umfasst. Bei der Bearbeitung der zu bearbeitenden Schaufelreihen 3 mittels einer Schleifmaschine entstehen insbesondere Funken, welche zur Beschädigungen der nicht zu bearbeitenden Schaufeln (Schaufelreihe 2) führen können.

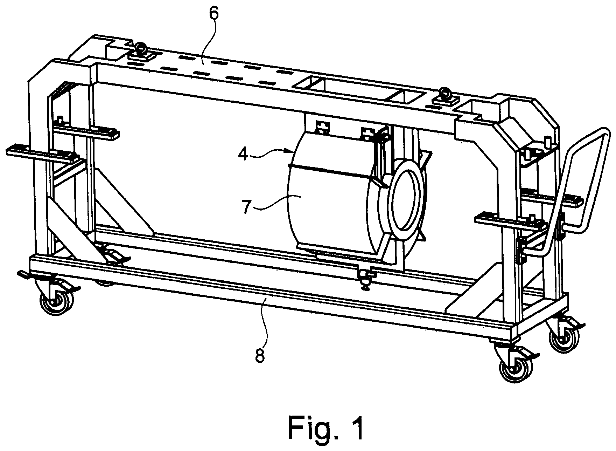

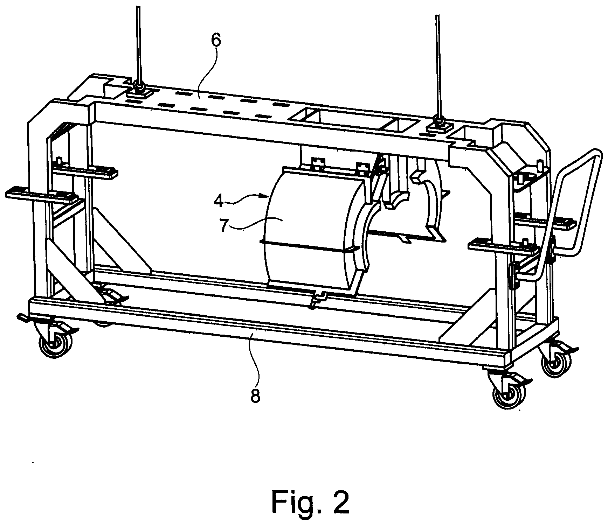

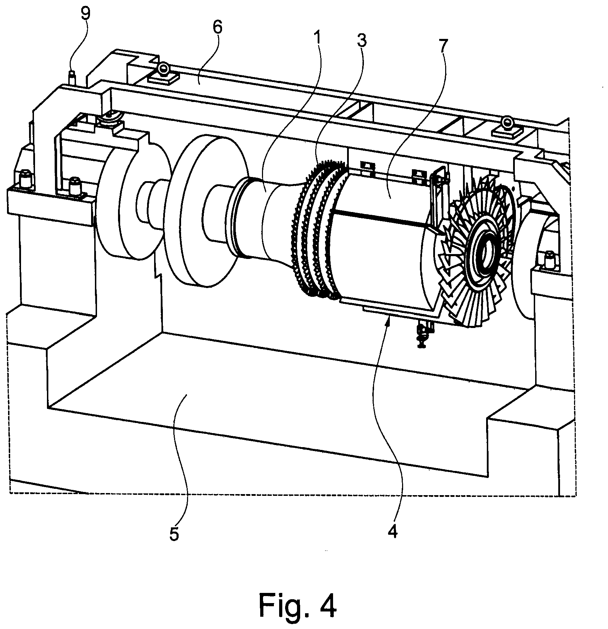

Die Fig. 1 und 2 zeigen ein Traggestell 6, welches zum Transport auf einen Wagen 8 aufgesetzt ist. An dem Traggestell 6 ist ein erfindungsgemäßes Schutzgehäuse 4 befestigt. Die Zuordnung des Schutzgehäuses 4 zu dem Traggestell 6 ist so gewählt, dass bei einer Montage des Traggestells 6 auf einer Bearbeitungsmaschine 5 (s. Fig. 4 und 5) das Schutzgehäuse 4 exakt zu den nicht zu bearbeitenden Schaufelreihen 2 positioniert ist.

Die Fig. 1 zeigt das Schutzgehäuse 4 im geschlossenen, fertigmontierten Zustand, in welchem es zur Kapselung der nicht zu bearbeitenden Schaufelreihen 2 während eines Bearbeitungsvorganges dient. Die Fig. 2 zeigt einen geöffneten Zustand des Schutzgehäuses 4. Daraus ist insbesondere ersichtlich, dass das Schutzgehäuse 4 zwei seitliche Gehäuseteile 7 umfasst, welche schwenkbar gelagert sind. Somit ist es möglich, wie in Fig. 3 gezeigt, das Schutzgehäuse 4 relativ zu dem Verdichterrotor 1 über Führungspins 9 und Gelenklager 10 zu positionieren und durch Schließen der Gehäuseteile 7 die nicht zu bearbeitenden Schaufelreihen 2 abzudecken oder zu kapseln. Durch die Schwenkbarkeit der Gehäuseteile 7 wird in zuverlässiger Weise vermieden, dass das Schutzgehäuse 4 oder die Gehäuseteile 7 in Kontakt mit den Schaufeln der Verdichterrotors 1 kommen. Beschädigungen sind bei richtiger Handhabung somit vollständig ausgeschlossen.

Die Fig. 4 zeigt einen Betriebszustand, bei welchem der Verdichterrotor 1 nach Schließen der Gehäuseteile 7 und nach dem dadurch erfolgenden Verkapseln der nicht zu bearbeitenden Schaufelreihen 2 (s. Fig. 3) zusammen mit dem Traggestell 6 an einer Bearbeitungsmaschine 5 positioniert ist. Es ist ersichtlich, dass das Gehäuseteil 7 stationär verbleibt, während der Verdichterrotor 1 zur Bearbeitung in Rotation versetzt wird.

Die Fig. 5 zeigt eine Ansicht, analog Fig. 4, in Seiten-Schnittansicht. Dabei ist nochmals die Kapselung der nicht zu bearbeitenden Schaufelreihen 2 durch das Schutzgehäuse 4 ersichtlich, während die zu bearbeitenden Schaufelreihen 3 frei zugänglich sind und somit bearbeitet werden können.

Erfindungsgemäß ist es möglich, an Randbereichen des Schutzgehäuses 4 Dichtungen oder Dichtungsanordnungen vorzusehen, um ein Eindringen von Partikeln, Flüssigkeiten und Fremdkörpern in den Innenraum des Schutzgehäuses 4 während der Bearbeitung zu vermeiden.

### Bezugszeichenliste

- 1: Verdichterrotor
- 2: Schaufelreihe (nicht zu bearbeiten)
- 3: Schaufelreihe (zu bearbeiten)
- 4: Schutzgehäuse
- 5: Bearbeitungsmaschine
- 6: Traggestell
- 7: Gehäuseteil
- 8: Transportwagen
- 9: Führungspin
- 10: Gelenklager

## Patentansprüche

1. Verfahren zum Bearbeiten von Schaufelspitzen eines montierten Verdichterrotors (1) einer Gasturbine, wobei der Verdichterrotor (1) zumindest eine Schaufelreihe (3) mit Schaufeln, welche zu bearbeiten sind und zumindest eine Schaufelreihe (2) mit nicht zu bearbeitenden Schaufeln umfasst, **dadurch gekennzeichnet, dass** die zumindest eine nicht zu bearbeitende Schaufelreihe (2) in ein stationäres Schutzgehäuse (4) aufgenommen wird, welches sich nicht mit dem Verdichterrotor (1) dreht und die Schaufelreihe (2) umschließt, wobei bewegbare Gehäuseteile (7) des stationären Schutzgehäuses (4) um die nicht zu bearbeitende Schaufelreihe (2) angeordnet und geschlossen werden, und dass nachfolgend mittels einer Bearbeitungsmaschine (5) unter Rotation des Verdichterrotors (1) die zumindest eine zu bearbeitende Schaufelreihe (3) bearbeitet wird.

2. Verfahren nach Anspruch 1, **dadurch gekennzeichnet, dass** mittels des Schutzgehäuses (4) die zumindest eine nicht zu bearbeitende Schaufelreihe (2) gegen Funkenflug, Partikel, Fremdkörper oder Flüssigkeiten abgeschirmt wird.

3. Verfahren nach Anspruch 1 oder 2, **dadurch gekennzeichnet, dass** das Schutzgehäuse (4) zusammen mit einem dieses tragende Traggestell (6) auf die Bearbeitungsmaschine (5) aufgesetzt wird.

4. Verfahren nach einem der Ansprüche 1 bis 3, **dadurch gekennzeichnet, dass** der Bearbeitungsvorgang ein Schleif- oder Fräsvorgangist.

5. Verfahren nach einem der Ansprüche 1 bis 4, **dadurch gekennzeichnet, dass** als Bearbeitungsmaschine (5) eine Schleif- oder Fräsmaschineverwendet wird.

6. Vorrichtung zum Bearbeiten von Schaufelspitzen eines montierten Verdichterrotors (1) einer Gasturbine mittels einer Bearbeitungsmaschine (5), **dadurch gekennzeichnet, dass** die Vorrichtung ein stationäres Schutzgehäuse (4) umfasst, so dass es sich nicht mit dem Verdichterrotor (1) dreht und welches zur Abdeckung zumindest einer nicht zu bearbeitenden Schaufelreihe (2) auf diese aufsetzbar ist, wobei das Schutzgehäuse (4) bewegbare Gehäuseteile (7) umfasst, welche um die nicht zu bearbeitende Schaufelreihe (2) anordbar sind und diese im geschlossenen Zustand umschließen.

7. Vorrichtung nach Anspruch 6, **dadurch gekennzeichnet, dass** ein Traggestell (6), an welchem das Schutzgehäuse (4) angeordnet ist, auf eine Bearbeitungsmaschine (5) zur Bearbeitung des Verdichterrotors (1) aufsetzbar ist.

8. Vorrichtung nach Anspruch 6, **dadurch gekennzeichnet, dass** die Gehäuseteile (7) klappbar oder schwenkbar ausgebildet sind.

## Claims

1. Method for machining blade tips of an assembled compressor rotor (1) of a gas turbine, wherein the compressor rotor (1) comprises at least one row of blades (3) having blades which are to be machined and at least one row of blades (2) having blades which are not to be machined, **characterized in that** the at least one row of blades (2) not to be machined is accommodated in a static protective housing (4), which is not rotated with the compressor rotor (1) and which encloses the row of blades (2), wherein movable housing parts (7) of the static protective housing (4) are arranged around the row of blades (2) not to be machined and are closed, and **in that** the at least one row of blades (3) to be machined is subsequently machined, with rotation of the compressor rotor (1), by means of a processing machine (5).

2. Method according to Claim 1, **characterized in that**, by means of the protective housing (4), the at least one row of blades (2) not to be machined is shielded against flying sparks, particles, foreign bodies or liquids.

3. Method according to Claim 1 or 2, **characterized in that** the protective housing (4) is, together with a support frame (6) supporting said housing, mounted onto the processing machine (5).

4. Method according to one of Claims 1 to 3, **characterized in that** the machining process is a grinding or milling process.

5. Method according to one of Claims 1 to 4, **characterized in that** a grinding or milling machine is used as the processing machine (5).

6. Device for machining blade tips of an assembled compressor rotor (1) of a gas turbine by means of a processing machine (5), **characterized in that** the device comprises a static protective housing (4), so that said housing is not rotated with the compressor rotor (1) and which housing, for the purpose of covering at least one row of blades (2) not to be machined, is able to be mounted onto it, wherein the protective housing (4) comprises movable housing parts (7) which are able to be arranged around the row of blades (2) not to be machined and which, in the closed state, enclose the latter.

7. Device according to Claim 6, **characterized in that** a support frame (6) on which the protective housing (4) is arranged is able to be mounted onto a processing machine (5) for machining the compressor rotor (1).

8. Device according to Claim 6, **characterized in that** the housing parts (7) are of hinged or pivotable form.

## Revendications

1. Procédé d'usinage d'extrémités d'aubes d'un rotor de compresseur monté (1) d'une turbine à gaz, le rotor de compresseur (1) comprenant au moins une rangée d'aubes (3) comportant des aubes qui sont à usiner et au moins une rangée d'aubes (2) comportant des aubes qui ne sont pas à usiner, **caractérisé en ce que** l'au moins une rangée d'aubes qui ne sont pas à usiner (2) est reçue dans un boîtier protecteur stationnaire (4) qui ne tourne pas avec le rotor de compresseur (1) et entoure la rangée d'aubes (2), des pièces de boîtier mobiles (7) du boîtier protecteur stationnaire (4) étant disposées autour de la rangée d'aubes (2) qui ne sont pas à usiner et fermées, et **en ce que**, au moyen d'une machine d'usinage (5), lors de la rotation du rotor de compresseur (1), l'au moins une rangée d'aubes qui sont à usiner (3) est ensuite usinée.

2. Procédé selon la revendication 1, **caractérisé en ce que** l'au moins une rangée d'aubes qui ne sont pas à usiner (2) est blindée contre les projections d'étincelles, les particules, les corps étrangers ou les liquides au moyen du boîtier protecteur (4).

3. Procédé selon la revendication 1 ou 2, **caractérisé en ce que** le boîtier protecteur (4) est posé conjointement avec un châssis porteur (6) le supportant sur la machine d'usinage (5).

4. Procédé selon une des revendications 1 à 3, **caractérisé en ce que** le processus d'usinage est un processus de meulage ou de fraisage.

5. Procédé selon une des revendications 1 à 4, **caractérisé en ce qu'**on utilise comme machine d'usinage (5) une meuleuse ou une fraiseuse.

6. Dispositif d'usinage d'extrémités d'aubes d'un rotor de compresseur monté (1) d'une turbine à gaz au moyen d'une machine d'usinage (5), **caractérisé en ce que** ce dispositif comprend un boîtier protecteur stationnaire (4) si bien que celui-ci ne tourne pas avec le rotor de compresseur (1) et lequel peut être posé, pour couvrir au moins une rangée d'aubes qui ne sont pas à usiner (2), sur celle-ci, le boîtier protecteur (4) comprenant des pièces de boîtier mobiles (7) qui peuvent être disposées autour de la rangée d'aubes qui ne sont pas à usiner (2) et entourent celle-ci à l'état fermé.

7. Dispositif selon la revendication 6, **caractérisé en ce qu'**un châssis porteur (6), sur lequel le boîtier protecteur (4) est disposé, peut être posé sur une machine d'usinage (5) pour usiner le rotor de compresseur (1).

8. Dispositif selon la revendication 6, **caractérisé en ce que** les pièces de boîtier (7) sont réalisées de manière à être rabattables ou pivotables.
